# FASCICULE DE BREVET EUROPEEN

(11) **EP 3 626 137 B1**
(45) Date de publication et mention de la délivrance du brevet: **02.06.2021**
(21) Numéro de dépôt: 19196988.0
(22) Date de dépôt: 12.09.2019
(51) Int. Cl.: A47J 31/44, A47J 43/07

(54) **DISPOSITIF D'AGITATION ROTATIF DE MACHINE DE PRÉPARATION DE BOISSONS ÉQUIPÉ D'UN DISPOSITIF D'ACCOUPLEMENT MAGNÉTIQUE**
DREHSCHÜTTELVORRICHTUNG FÜR GETRÄNKEZUBEREITUNGSMASCHINE, DIE MIT EINER MAGNETISCHEN KUPPLUNGSVORRICHTUNG AUSGESTATTET IST
ROTARY STIRRING DEVICE FOR A BEVERAGE PREPARATION MACHINE PROVIDED WITH A MAGNETIC COUPLING DEVICE

(30) Priorité: 24.09.2018 FR 1858668
(43) Date de publication de la demande: 25.03.2020
(73) Titulaire: SEB S.A., 69130 Ecully (FR)
(72) Inventeur: BEAUDET, Olivier, 61140 RIVES D'ANDAINE (FR); LEFORGEAIS, Michel, 14250 TILLY SUR SEULLES (FR); JOULAUD, Laurent, 53300 SAINT FRAIMBAULT DE PRIERES (FR)
(74) Mandataire: SEB Développement

(56) Documents cités:
- EP-A1- 2 721 980
- FR-A1- 3 056 896
- US-A1- 2013 000 490

## Description

### Domaine technique

La présente invention concerne les appareils de distribution de boissons qui comportent un dispositif d'agitation rotatif avec distribution d'eau chaude et/ou de vapeur, notamment des machines de préparation de boissons à base de lait chaud ou froid moussé (cappuccino, latté, chocolat, cocktail...) ou à base de crème fouettée (cafés et chocolat spéciaux).

### Etat de la technique

Il est connu des machines de préparation de boissons qui comportent notamment un dispositif d'agitation rotatif, lequel comprend un outil rotatif autour d'un axe vertical et destiné à agiter une préparation contenue dans un récipient et un conduit d'acheminement d'eau chaude et/ou de vapeur vers l'outil rotatif en sorte de diluer et/ou réchauffer ladite préparation dans le récipient en la faisant mousser.

Un exemple d'une telle machine de préparation de boissons est décrit dans la demande de brevet EP2721980A1.

Selon cette demande de brevet EP2721980A1, le conduit d'acheminement comporte une partie tubulaire qui s'étend le long de l'axe vertical entre une première extrémité qui est accouplée à l'outil rotatif et une seconde extrémité qui est accouplée de manière amovible à un arbre d'entrainement au moyen d'un dispositif d'accouplement. La possibilité de démonter la partie tubulaire avec l'outil rotatif facilite leur nettoyage sous l'eau ou dans un lave-vaisselle.

Le dispositif d'accouplement mis en œuvre dans cette demande de brevet EP2721980A1 présente divers inconvénients. En effet, l'assemblage et le retrait de la partie tubulaire vis-à-vis de l'arbre d'entraînement nécessitent une manipulation du dispositif d'accouplement, laquelle n'est pas intuitive. Lors de l'assemblage, l'utilisateur peut mal enclencher le dispositif d'accouplement ; durant la rotation, la partie tubulaire peut malencontreusement se détacher de l'arbre d'entraînement. En outre, la pression de l'eau chaude et/ou de la vapeur à l'intérieur de la partie tubulaire peut générer des fuites au niveau du dispositif d'accouplement.

### Résumé de l'invention

La présente invention pallie les inconvénients précités. A cet effet, l'invention concerne un dispositif d'agitation rotatif d'une machine de préparation de boissons. Le dispositif d'agitation rotatif comprend un outil rotatif autour d'un axe A et destiné à agiter une préparation contenue dans un récipient, par exemple du lait. Le dispositif d'agitation rotatif comprend également un conduit d'acheminement d'eau chaude et/ou de vapeur vers l'outil rotatif. Ce conduit d'acheminement comporte une partie creuse d'un arbre d'entrainement qui communique avec une partie tubulaire qui s'étend le long de l'axe A entre une première extrémité qui est accouplée à l'outil rotatif au moyen d'un premier dispositif d'accouplement et une seconde extrémité qui est accouplée à ladite partie creuse de l'arbre d'entrainement au moyen d'un second dispositif d'accouplement, ce qui permet de réaliser une connexion fluidique d'eau chaude et/ou de vapeur. Ainsi l'eau chaude et/ou la vapeur circule dans la partie creuse de l'arbre d'entraînement puis dans la partie tubulaire qui est accouplée audit arbre d'entraînement.

De manière remarquable, le second dispositif d'accouplement est un dispositif d'accouplement magnétique configuré pour générer une force d'attraction magnétique le long de l'axe A entre l'arbre d'entrainement et la seconde extrémité de la partie tubulaire, de sorte à transmettre le mouvement de rotation de l'arbre d'entrainement à l'outil rotatif. En outre, le dispositif d'accouplement magnétique comporte un organe métallique agencé sur la seconde extrémité de la partie tubulaire et formé par une bague interne réalisée en acier inoxydable résistant à la corrosion en ambiance vapeur et une bague externe réalisée en un matériau ferromagnétique. Lors de la réalisation de l'accouplement de la partie tubulaire sur l'arbre d'entraînement, cette bague interne est destinée à coulisser sur la partie creuse qui est également réalisée en acier inoxydable résistant à la corrosion en ambiance vapeur. L'utilisation d'un tel organe métallique permet avantageusement de réduire l'usure en mettant en contact la bague interne avec la partie creuse de l'arbre d'entraînement. On augmente ainsi la durée de vie de la partie tubulaire recevant l'outil rotatif.

L'accouplement de la partie tubulaire avec l'arbre d'entraînement s'effectue tout simplement en les emboîtant l'un dans l'autre, sans aucune manipulation complémentaire, le dispositif d'accouplement magnétique assurant alors une force d'attraction magnétique favorisant ledit emboîtement jusqu'à ce que la partie tubulaire atteigne une position de butée vis-à-vis de l'arbre d'entraînement, position de butée selon laquelle lesdits éléments sont accouplés. Cette position de butée indique à l'utilisateur que l'accouplement est effectué convenablement. Inversement, le retrait de la partie tubulaire avec l'outil rotatif s'effectue simplement en exerçant une force de traction sur ladite partie tubulaire, supérieure à la force d'attraction magnétique, ce qui la dégage de l'arbre d'entrainement. La rotation de l'arbre d'entraînement engendre celle de la partie tubulaire et de l'outil rotatif, par l'intermédiaire du dispositif d'accouplement magnétique qui permet d'assujettir lesdits éléments.

Le premier dispositif d'accouplement entre la première extrémité de la partie tubulaire et l'outil rotatif peut être de conceptions très variées. Ainsi, le premier dispositif d'accouplement peut assurer un montage permanent entre la première extrémité et l'outil rotatif de sorte qu'ils sont difficilement démontables voire pas du tout, par exemple en réalisant la partie tubulaire et l'outil rotatif au moyen d'une seule et même pièce ou en assemblant la partie tubulaire et l'outil rotatif au moyen de vis de fixation ou d'un collage. Au contraire, ce premier dispositif d'accouplement peut assurer un montage de manière amovible entre la première extrémité et l'outil rotatif, par exemple au moyen d'un système d'assemblage à baïonnette ou d'un emboîtement entre lesdits éléments. Le démontage de l'outil rotatif vis-à-vis de la première extrémité de la partie tubulaire sera préférable afin de permettre leur nettoyage indépendamment ou le changement d'outil rotatif, par exemple.

Selon une réalisation du dispositif d'agitation rotatif, la bague interne est montée serrante dans la bague externe. Cela permet d'assujettir la bague interne et la bague externe au moyen de ces deux seules bagues, sans aucune pièce complémentaire, de façon à garantir un accouplement sans glissement entre lesdites bagues. Bien entendu, on pourrait envisager des variantes de moyens d'assujettissement entre la bague interne et la bague externe.

Selon une réalisation du dispositif d'agitation rotatif, la seconde extrémité de la partie tubulaire est réalisée en une matière plastique qui entoure une face extérieure de la bague externe. En d'autres termes, la seconde extrémité de la partie tubulaire est surmoulée sur les parois extérieures de la bague externe. Cela permet de fixer l'organe métallique sur la seconde extrémité de la partie tubulaire, tout en isolant ladite bague externe vis-à-vis de l'extérieur afin de la protéger contre la corrosion.

Selon une réalisation du dispositif d'agitation rotatif, la partie creuse de l'arbre d'entrainement présente un diamètre externe D et la bague interne présente une hauteur H. En outre, la hauteur H est supérieure au diamètre D. De préférence, la hauteur H est cinq fois supérieure au diamètre D. Cela permet de disposer d'une bonne maîtrise de la rotation et du guidage de la partie tubulaire avec l'outil rotatif, malgré les efforts radiaux exercés sur ledit outil rotatif durant l'agitation de la préparation contenue dans le récipient.

Selon une réalisation du dispositif d'agitation rotatif, la partie creuse de l'arbre d'entrainement comporte une gorge munie d'un joint d'étanchéité qui est agencé en vis-à-vis de la bague interne lorsque la partie tubulaire est accouplée à l'arbre d'entrainement.

Selon une réalisation du dispositif d'agitation rotatif l'arbre d'entrainement comporte un élément magnétique formé par un aimant permanent qui génère sur l'organe métallique une force d'attraction magnétique et qui tend à plaquer une paroi motrice de l'arbre d'entrainement contre une paroi réceptrice de la seconde extrémité de la partie tubulaire pour transmettre le mouvement de rotation de l'arbre d'entrainement à la partie tubulaire.

Selon une réalisation du dispositif d'agitation rotatif, la paroi motrice de l'arbre d'entrainement et la paroi réceptrice de la seconde extrémité de la partie tubulaire s'étendent chacune dans un plan perpendiculaire à l'axe A. Cela permet d'augmenter la surface de contact et d'attraction magnétique entre la paroi motrice et la paroi réceptrice.

Selon une réalisation, le dispositif d'agitation rotatif comporte un dispositif de détection de la présence de la partie tubulaire sur l'arbre d'entrainement. La partie tubulaire comporte une excroissance en diamètre au niveau de l'élément magnétique ou magnétisable qui coupe un faisceau dudit dispositif de détection lorsque ladite partie tubulaire est assemblée sur l'arbre d'entrainement. De préférence, le dispositif de détection est un dispositif de détection optique comportant une cellule émettrice d'un faisceau lumineux et une cellule réceptrice dudit faisceau, la partie tubulaire coupant le faisceau lumineux lorsqu'elle est assemblée sur l'arbre d'entrainement. De préférence, le dispositif de détection optique comporte au moins un guide optique de renvoi à 90° du faisceau lumineux. Ainsi, il est possible de détecter l'accouplement de la seconde extrémité de la partie tubulaire avec l'arbre d'entraînement, ce qui permet de générer de la vapeur uniquement si l'outil rotatif est effectivement en place, prêt à être utilisé. De plus, la détection de la présence de l'outil rotatif permet également de savoir si l'utilisateur a retiré ou non l'outil rotatif en fin de recette, ce qui permet par exemple de programmer la machine de préparation de boissons pour gérer le nettoyage de l'outil rotatif après un nombre défini de préparations de boissons au moyen dudit outil rotatif, par exemple en émettant à signal sonore ou visuel d'information sur le nettoyage de l'outil rotatif à réaliser.

Selon une réalisation du dispositif d'agitation rotatif, le second dispositif d'accouplement comporte un système de butées mécaniques anti-glissement qui assure un alignement automatique entre l'arbre d'entrainement et la seconde extrémité de la partie tubulaire, lors de l'accouplement sous l'effet de la force d'attraction magnétique. La présence d'un tel système de butées mécaniques anti-glissement assure un auto positionnement lors de l'accouplement de la seconde extrémité de la partie tubulaire avec l'arbre d'entraînement, sous l'action seule de la force d'attraction magnétique exercée par le dispositif d'accouplement magnétique. En outre, ce système de butées mécaniques anti-glissement évite tout risque de rotation selon l'axe A entre l'arbre d'entraînement et la partie tubulaire, du fait notamment de la résistance exercée sur l'outil rotatif qui tourne dans la préparation alimentaire contenue dans le récipient.

De préférence, le système de butées mécaniques comporte au moins un organe proéminent d'entrainement agencé sur une paroi motrice de l'arbre d'entraînement et au moins un logement de réception agencé sur une paroi réceptrice de la seconde extrémité de la partie tubulaire, l'au moins un organe proéminent d'entrainement, une fois en place dans l'au moins un logement de réception, assurant un entrainement positif - c'est-à-dire sans glissement - de l'outil rotatif. De préférence, l'au moins un organe proéminent d'entrainement comporte une rampe en forme d'hélice agencée sur un cercle de centre appartenant à l'axe A, l'au moins un logement de réception présentant une forme complémentaire.

Bien entendu, il est possible de prévoir d'autres systèmes de butées mécaniques qui nécessiteraient de positionner angulairement la seconde extrémité de la partie tubulaire vis-à-vis de l'arbre d'entraînement jusqu'à ce que les butées mécaniques soient enclenchées, la force d'attraction magnétique exercée par le dispositif d'accouplement assurant ensuite le maintien de l'accouplement et des butées entre la seconde extrémité de la partie tubulaire et l'arbre d'entraînement.

Selon une réalisation du dispositif d'agitation rotatif, la bague externe a une épaisseur E1 supérieure à 0,5mm, de préférence supérieure à 1mm. De même, la bague interne a une épaisseur E2 supérieure à 0,5mm, de préférence supérieure à 1mm.

Selon l'invention, le dispositif d'agitation rotatif comporte un moteur électrique destiné à entrainer l'arbre d'entraînement.

Selon l'invention, le dispositif d'agitation rotatif comprend une boite à vapeur comportant une chambre, un canal radial d'entrée vapeur, deux paliers étanches de guidage de l'arbre d'entrainement. En outre, la partie creuse de l'arbre d'entraînement est configurée pour relier la chambre à la partie tubulaire de façon à acheminer l'eau chaude et/ou la vapeur.

### Brève description des figures

La description suivante met en évidence les caractéristiques et avantages de la présente invention. Cette description s'appuie sur des figures, parmi lesquelles :
- Les figures 1 et 2 illustrent deux vues d'ensemble d'un mode de réalisation d'une machine de préparation de boissons comportant un dispositif d'agitation rotatif selon l'invention, suivant deux positions dudit dispositif ;
- La figure 3 illustre une coupe du dispositif d'agitation rotatif mettant notamment en évidence l'assemblage de la partie tubulaire avec l'arbre d'entraînement et le conduit d'acheminement de l'eau chaude et/ou de la vapeur;
- La figure 4 met en évidence la présence d'un dispositif de détection de l'accouplement de la seconde extrémité de la partie tubulaire avec l'arbre d'entraînement ;
- Les figures 5 et 6 mettent en évidence le système de butées mécaniques anti-glissement sur le second dispositif d'accouplement ;
- La figure 7 illustre une réalisation préférentielle de l'organe métallique mis en œuvre au niveau de la seconde extrémité de la partie tubulaire ;
- La figure 8 met en évidence la présence de capteur optique sur le dispositif d'agitation rotatif.

### Description détaillée

Dans la suite de la description, la machine de préparation de boissons est dénommée « machine ».

Dans la suite de la description, les termes « horizontal », « vertical », « inférieur », « supérieur », « longitudinal », « transversal », « haut », « bas », qui pourraient être employés, le seront en considération de la position de la machine reposant sur un plan de travail, en situation d'usage.

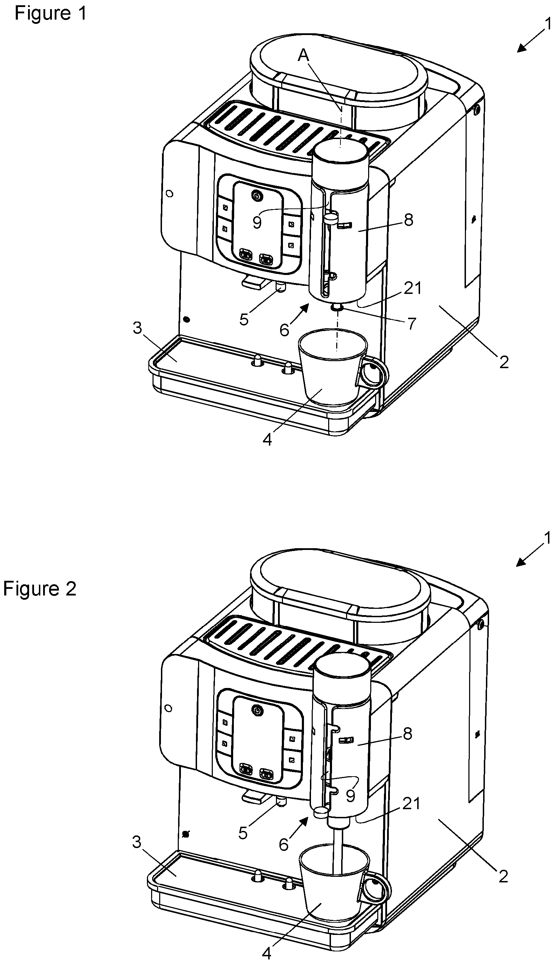

Sur les figures 1 et 2, la machine 1 comporte notamment un bâti 2, un support 3 sur lequel un récipient 4 peut être disposé durant la préparation d'une boisson, et un dispositif de distribution qui comporte notamment une buse 5 permettant la distribution d'une boisson à base de café, de thé et/ou de chocolat, par exemple. Ces caractéristiques sont déjà connues sur les machines de préparation de boissons, elles ne sont donc pas détaillées, l'homme du métier pouvant se référer aux machines existantes.

La machine 1 comprend également un dispositif d'agitation rotatif 6 comprenant un outil rotatif 7 autour d'un axe A et destiné à agiter une préparation contenue dans le récipient 4, par exemple du lait. Cet axe A est défini verticalement sur la machine 1. Le dispositif d'agitation rotatif 6 est monté en translation selon l'axe A, à l'intérieur d'une pièce de guidage 8 agencée sur le bâti 2, de sorte à permettre son déplacement selon une position haute illustrée en figure 1, où l'outil rotatif 7 est dégagé du récipient 4, et une position basse illustrée en figure 2, où l'outil rotatif 7 est inséré dans le récipient 4.

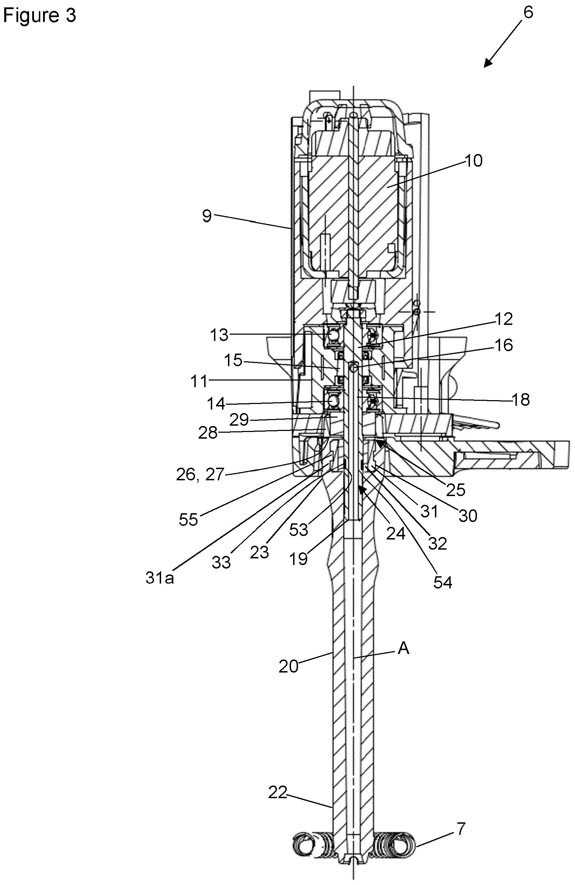

Tel qu'illustré sur la figure 3, le dispositif d'agitation rotatif 6 comporte un corps 9 monté en translation selon l'axe A sur la pièce de guidage 8 illustrée en figures 1 et 2, au moyen de glissières (non illustrées). A l'intérieur du corps 9 sont agencés un moteur électrique 10 et une boîte à vapeur 11. Le moteur électrique 10 entraîne en rotation selon l'axe A un arbre d'entrainement 12, lequel est monté en liaison pivot d'axe A vis-à-vis de la boîte à vapeur 11 au moyen de deux paliers de roulement étanches 13, 14; l'étanchéité mise en œuvre entre la boîte à vapeur 11, les paliers 13, 14 et l'arbre d'entraînement 12 permettant de définir une chambre 15. Un canal radial (non illustré) traverse la boîte vapeur 11 et débouche dans la chambre 15, ce canal radial étant raccordé à un conduit souple (non illustré) qui permet les déplacements en translation selon l'axe A du dispositif d'agitation rotatif 6 vis-à-vis de la pièce de guidage 8, sans contrainte. Le conduit souple alimente en eau chaude et/ou en vapeur la chambre 15. L'arbre d'entrainement 12 présente une partie creuse 18 s'étendant selon l'axe A et débouchant d'un côté dans la chambre 15 grâce à un orifice 16 traversant ladite partie creuse 18 et, de l'autre côté, sur l'extrémité inférieure 19 de l'arbre d'entraînement 12.

Tel qu'illustré sur la figure 3, le dispositif d'agitation rotatif 6 comprend une partie tubulaire 20 qui s'étend selon l'axe A et passe au travers d'un fond 21 (illustré en figures 1 et 2) de la pièce de guidage 8. L'extrémité inférieure 22 de la partie tubulaire 20 est assemblée avec l'outil rotatif 7, de préférence par emboîtement ou au moyen d'un assemblage à baïonnette. L'extrémité supérieure 23 de la partie tubulaire 20 est accouplée de manière amovible avec l'arbre d'entrainement 12. Ainsi, le canal souple, le conduit radial, la chambre 15, la partie creuse 18 de l'arbre d'entraînement 12 et la partie tubulaire 20 définissent un conduit 24 d'acheminement d'eau chaude et/ou de vapeur vers l'outil rotatif 7.

Tel qu'illustré en regard des figures 3 à 7, l'accouplement de l'extrémité supérieure 23 de la partie tubulaire 20 avec l'arbre d'entraînement 12 est mis en œuvre par l'intermédiaire d'un dispositif d'accouplement magnétique 25. Ce dispositif d'accouplement magnétique 25 met en œuvre une force d'attraction magnétique dans le sens de l'axe A, entre une paroi motrice 26 de l'arbre d'entraînement 12 et une paroi réceptrice 27 de l'extrémité supérieure 23 de la partie tubulaire 20, ces parois motrice 26 et réceptrice 27 s'étendant dans des plans perpendiculaires à l'axe A. Cette force d'attraction magnétique permet de plaquer la paroi réceptrice 27 contre la paroi motrice 26 en sorte de maintenir assemblée l'extrémité supérieure 23 de la partie tubulaire 20 avec l'arbre d'entraînement 12 et d'engendrer la rotation de la paroi réceptrice 27 sous l'action de la rotation de la paroi motrice 26.

Le dispositif d'accouplement magnétique 25 comprend une pièce de support 28 qui comporte la paroi motrice 26 sur sa face inférieure 28a, cette pièce de support 28 étant emboîtée en force sur l'arbre d'entraînement 12 de sorte que ladite pièce de support 28 et ledit arbre d'entraînement 12 sont assujettis et forment un ensemble. Le dispositif d'accouplement magnétique 25 comprend un aimant permanent 29 qui présente une forme tubulaire, comme l'illustre la figure 3, cet aimant permanent 29 étant logé à l'intérieur de la pièce de support 28 préalablement à son emboîtement en force sur l'arbre d'entraînement 12 qui passe au travers dudit aimant permanent 29. Des moyens de blocage en rotation (non illustrés) sont prévus entre la pièce de support 28 et l'aimant permanent 29 de façon à éviter la rotation de l'aimant permanent 29 selon l'axe A, à l'intérieur de la pièce de support 28. A titre d'exemple, on peut prévoir un emboîtement en force de l'aimant permanent 29 dans la pièce de support.

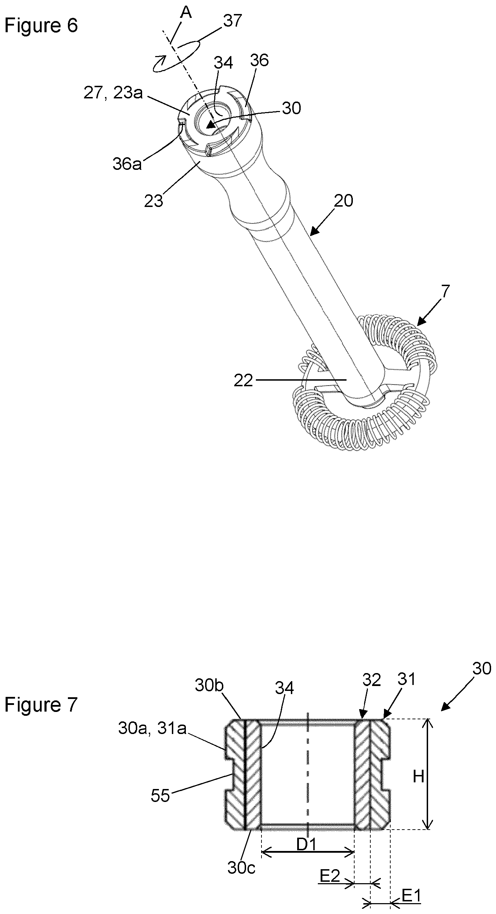

Le dispositif d'accouplement 25 comprend un organe métallique constitué d'un insert 30 qui présente une forme tubulaire, comme l'illustrent les figures 3 et 7. L'extrémité supérieure 23 de la partie tubulaire 20, qui comporte la paroi réceptrice 27 sur sa face supérieure 23a, est surmoulée sur les parois extérieures 30a, 30b, 30c de l'insert 30, ce qui permet d'assujettir cet insert 30 sur ladite extrémité supérieure 23. Tel qu'illustré en figure 7, l'insert 30 comprend une bague externe 31 et une bague interne 32 qui sont montées en force l'une dans l'autre pour former une seule et même pièce (l'insert 30). La bague externe 31 est réalisée dans un matériau ferromagnétique et la bague interne 32 est réalisée dans un acier inoxydable résistant à la corrosion en ambiance vapeur. Cette bague interne 32 est montée glissante sur l'arbre d'entraînement 12. De préférence, la bague externe 31 est réalisée dans un inox 420 ou 430 ferromagnétique et la bague interne 32 est réalisée dans un inox 304. Grâce au surmoulage de l'extrémité supérieure 23 de la partie tubulaire 20 sur l'insert 30, la bague externe 31 est complétement revêtue par la matière - un polymère - de ladite extrémité supérieure 23, ce qui protège ladite bague externe 31 contre la corrosion.

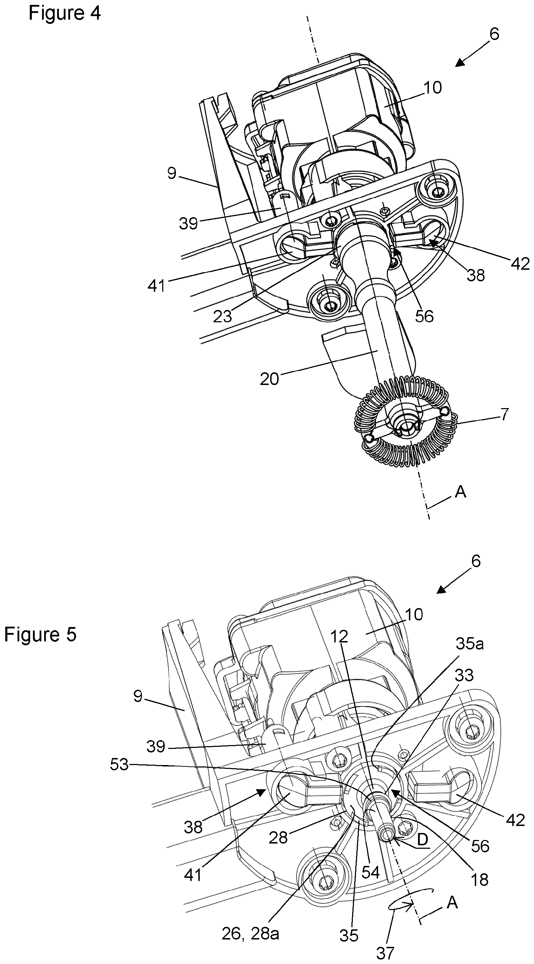

En regard des figures 3 et 5, un joint d'étanchéité 33 est logé dans une gorge 53 agencée sur l'arbre d'entraînement 12 et vient au contact de la paroi interne 34 de la bague interne 32 lorsque la paroi réceptrice 27 est plaquée contre la paroi motrice 26. Durant l'utilisation du dispositif d'agitation rotatif 6, l'injection d'eau chaude et/ou de vapeur peut engendrer une montée en pression dans le conduit 24 d'acheminement ; l'étanchéité mise en œuvre grâce au joint d'étanchéité 33 évite tout risque de fuite d'eau chaude et/ou de vapeur au niveau du raccordement entre la partie tubulaire 20 et l'arbre d'entrainement 12.

Tel qu'illustré sur la figure 3, la paroi interne 34 de la bague interne 32 vient en contact avec la paroi externe 54 de la partie creuse 18 de l'arbre d'entraînement 12. Cette paroi externe 54 présente un diamètre externe D qui est très légèrement inférieur au diamètre interne D1 de la paroi interne 34 - de quelques microns - de sorte à réaliser un montage coulissant de la bague interne 32 sur ladite partie creuse 18. La bague interne 32 présente une hauteur H qui est supérieure au diamètre externe D pour assurer une maîtrise convenable de la rotation de la partie tubulaire 20 avec l'outil rotatif 7 et un guidage convenable de l'extrémité supérieure 23 de la partie tubulaire lors de son accouplement avec l'arbre d'entraînement 12. De préférence, la hauteur H est au moins cinq fois supérieure au diamètre externe D.

De préférence la bague externe 31 a une épaisseur E1 supérieure à 0,5mm, de préférence supérieure à 1mm afin de disposer d'une surface magnétisante suffisante pour réaliser l'attraction magnétique par l'aimant permanent 29. De même, la bague interne 32 a une épaisseur E2 supérieure à 0,5mm, de préférence supérieure à 1mm en sorte d'éviter une déformation de la bague interne 32 lors de son emboîtement en force dans la bague externe 31. Une gorge 55 est mise en œuvre sur le contour externe 31a de la bague externe 31 afin d'améliorer l'ancrage de l'insert 30 dans l'extrémité supérieure 23 de la partie tubulaire 20 lors du surmoulage.

En regard des figures 5 et 6, la paroi motrice 26 comprend quatre organes proéminents 35 sous la forme de rampes hélicoïdales uniformément réparties autour d'un cercle de centre passant par l'axe A. La paroi réceptrice 27 comprend, quant à elle, quatre logements 36 ayant une forme complémentaire à celle des quatre organes proéminents 35. Le nombre d'organes proéminents 35 et de logements 36 pourrait être différent, par exemple de trois. Lors de l'emboîtement de l'extrémité supérieure 23 de la partie tubulaire 20 sur l'arbre d'entraînement 12, l'aimant permanent 29 exerce une force d'attraction magnétique sur l'insert 30, ce qui attire la paroi réceptrice 27 vers la paroi motrice 26, les organes proéminents 35 se logeant au moins partiellement respectivement dans les logements 36 ; la forme hélicoïdale des organes proéminents 35 et des logements 36 et la force d'attraction magnétique assurent alors un auto positionnement desdits organes proéminents 35 dans lesdits logements 36 jusqu'à ce que la paroi réceptrice 27 vienne totalement en butée contre la paroi motrice 26 où lesdits éléments sont auto-alignés. Durant la rotation de l'arbre d'entraînement 12, qui s'effectue dans le sens de la flèche 37, les extrémités 35a des organes proéminents 35 viennent en butée contre les extrémités 36a des logements 36, ce qui assure un entraînement positif de la partie tubulaire 20. Ainsi, les organes proéminents 35 et les logements 36 mettent en œuvre un système de butées mécaniques anti-glissement qui assure un alignement automatique entre la paroi motrice 26 et la paroi réceptrice 27.

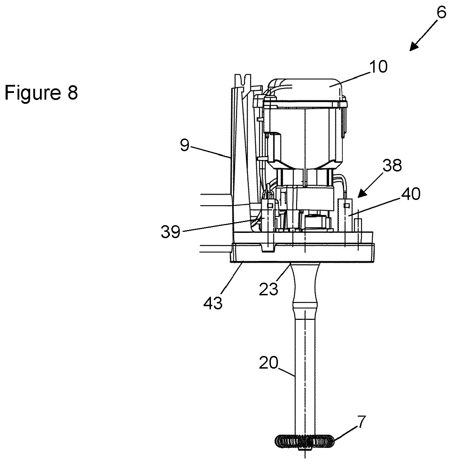

En regard des figures 4 à 6 et 8, le dispositif d'agitation rotatif 6 comprend un dispositif de détection 38 qui permet de détecter l'accouplement de l'extrémité supérieure 23 de la partie tubulaire 20 avec l'arbre d'entraînement 12 grâce audit dispositif d'accouplement magnétique 25. Le dispositif de détection 38 comprend une cellule 39 émettrice d'un faisceau lumineux, de préférence un émetteur optique infrarouge qui présente l'avantage d'être peu sensible à la lumière extérieure. Le dispositif de détection 38 comprend également une cellule 40 réceptrice dudit faisceau lumineux, de préférence un capteur optique infrarouge qui présente également l'avantage d'être peu sensible à la lumière extérieure. Le dispositif de détection 38 comporte deux guides optiques 41, 42 de renvoi à 90° du faisceau lumineux, ce qui permet de loger les cellules émettrice 39 et réceptrice 40 verticalement à l'intérieur du corps 9 du dispositif d'agitation rotatif 6 et d'effectuer un renvoi d'angle du faisceau lumineux sous le corps 9, selon une trajectoire horizontale passant dans la zone d'accouplement 56 entre l'extrémité supérieure 23 de la partie tubulaire 20 et l'arbre d'entraînement 12. Un capot 43 se positionne sous le corps 9 pour assurer une protection des guides optiques 41, 42 et éviter les perturbations de la lumière extérieure. L'extrémité supérieure 23 de la partie tubulaire 20, dans laquelle est logé l'insert 30, comporte une excroissance en diamètre qui permet de couper le faisceau lumineux lors de l'accouplement de ladite extrémité supérieure 23 avec l'arbre d'entrainement 12. Cette coupure du faisceau lumineux signale donc la présence de la partie tubulaire 20 avec l'outil rotatif 7 sur le dispositif d'agitation rotatif 6.

La mise en place de la partie tubulaire 20, assemblée avec l'outil rotatif 7, sur l'arbre d'entrainement 12 s'effectue simplement par emboîtement, comme expliqué précédemment. Leur retrait s'effectue également simplement en tirant dessus pour les dégager ; il suffit d'exercer une force de traction supérieure à la force d'attraction magnétique de l'aimant permanent 29.

La description qui précède d'un mode préférentiel de réalisation n'est pas limitative, des variantes pouvant être envisagées sans sortir du cadre de l'invention.

A titre d'exemple, la machine 1 pourrait comprendre simplement le dispositif d'agitation rotatif 6, la préparation de café, de thé et/ou de chocolat pouvant être réalisée sur une machine de préparation de boissons indépendante disposant uniquement d'un dispositif de distribution de boissons.

## Revendications

1. Dispositif d'agitation rotatif (6) d'une machine de préparation de boissons (1), ledit dispositif comprenant un outil rotatif (7) autour d'un axe A et destiné à agiter une préparation contenue dans un récipient (4) et un conduit (24) d'acheminement d'eau chaude et/ou de vapeur vers l'outil rotatif, ledit conduit d'acheminement comportant une partie creuse (18) d'un arbre d'entrainement (12) qui communique avec une partie tubulaire (20) qui s'étend le long de l'axe A entre une première extrémité (22) qui est accouplée à l'outil rotatif au moyen d'un premier dispositif d'accouplement et une seconde extrémité (23) qui est accouplée à ladite partie creuse au moyen d'un second dispositif d'accouplement **caractérisé en ce que** le second dispositif d'accouplement est un dispositif d'accouplement magnétique (25) configuré pour générer une force d'attraction magnétique le long de l'axe A entre l'arbre d'entrainement (12) et la seconde extrémité (23) de la partie tubulaire (20), le dispositif d'accouplement magnétique comportant un organe métallique (30) agencé sur ladite seconde extrémité (23) et formé par une bague interne (32) réalisée en acier inoxydable résistant à la corrosion en ambiance vapeur et une bague externe (31) réalisée en un matériau ferromagnétique, la bague interne (32) étant destinée à coulisser sur la partie creuse (18) qui est réalisée en acier inoxydable résistant à la corrosion en ambiance vapeur, lors de la réalisation de l'accouplement.

2. Dispositif d'agitation rotatif (6) selon la revendication 1, **caractérisé en ce que** la bague interne (32) est montée serrante dans la bague externe (31).

3. Dispositif d'agitation rotatif (6) selon l'une quelconque des revendications 1 à 2, **caractérisé en ce que** la seconde extrémité (23) de la partie tubulaire (20) est réalisée en une matière plastique qui entoure une face extérieure de la bague externe (31).

4. Dispositif d'agitation rotatif (6) selon l'une quelconque des revendications 1 à 3, **caractérisé en ce que** la partie creuse (18) de l'arbre d'entrainement (12) présente un diamètre externe D et **en ce que** la bague interne (32) présente une hauteur H, la hauteur H étant supérieure au diamètre D.

5. Dispositif d'agitation rotatif (6) selon l'une quelconque des revendications 1 à 4, **caractérisé en ce que** la partie creuse (18) de l'arbre d'entrainement (12) comporte une gorge (53) munie d'un joint d'étanchéité (33) qui est agencé en vis-à-vis de la bague interne (32) lorsque la partie tubulaire (20) est accouplée à l'arbre d'entrainement (12).

6. Dispositif d'agitation rotatif (6) selon l'une quelconque des revendications 1 à 5, **caractérisé en ce que** l'arbre d'entrainement (12) comporte un élément magnétique formé par un aimant permanent (29) qui génère sur l'organe métallique (30) une force d'attraction magnétique et qui tend à plaquer une paroi motrice (26) de l'arbre d'entrainement contre une paroi réceptrice (27) de la seconde extrémité (23) de la partie tubulaire (20) pour transmettre le mouvement de rotation de l'arbre d'entrainement (12) à la partie tubulaire (20).

7. Dispositif d'agitation rotatif (6) selon la revendication 6, **caractérisé en ce que** la paroi motrice (26) de l'arbre d'entrainement (12) et la paroi réceptrice (27) agencée sur la seconde extrémité (23) de la partie tubulaire (20) s'étendent dans un plan perpendiculaire à l'axe A.

8. Dispositif d'agitation rotatif (6) selon l'une quelconque des revendications 1 à 7, **caractérisé en ce qu'**il comporte un dispositif de détection (38) optique de la présence de la partie tubulaire (20) sur l'arbre d'entrainement (12) comportant une cellule émettrice (39) d'un faisceau lumineux et une cellule réceptrice (40) dudit faisceau, la partie tubulaire comportant une excroissance en diamètre au niveau de l'organe métallique (30) qui coupe le faisceau lorsque ladite partie tubulaire est assemblée sur l'arbre d'entrainement.

9. Dispositif d'agitation rotatif (6) selon la revendication 8, **caractérisé en ce que** le dispositif de détection (38) optique comporte au moins un guide optique (41, 42) de renvoi à 90° du faisceau lumineux.

10. Dispositif d'agitation rotatif (6) selon l'une quelconque des revendications 1 à 9, **caractérisé en ce que** le second dispositif d'accouplement comporte un système de butées mécaniques anti-glissement qui s'alignent automatiquement lors de l'accouplement sous l'effet de la force d'attraction magnétique.

11. Dispositif d'agitation rotatif (6) selon l'une quelconque des revendications 1 à 10, **caractérisé en ce qu'**il comporte un moteur électrique (10) destiné à entrainer l'arbre d'entraînement (12).

12. Dispositif d'agitation rotatif (6) selon l'une quelconque des revendications 1 à 11, **caractérisé en ce que** ledit dispositif d'agitation comprend une boite à vapeur (11) comportant une chambre (15), un canal radial d'entrée vapeur, deux paliers étanches (13, 14) de guidage de l'arbre d'entrainement (12), la partie creuse (18) de l'arbre d'entraînement (12) reliant la chambre (15) à la partie tubulaire (20) de façon à acheminer l'eau chaude et/ou la vapeur.

13. Dispositif d'agitation rotatif (6) selon l'une quelconque des revendications 1 à 12, **caractérisé en ce que** la bague externe (31) a une épaisseur E1 supérieure à 0,5mm, de préférence supérieure à 1mm.

14. Dispositif d'agitation rotatif (6) selon l'une quelconque des revendications 1 à 13, **caractérisé en ce que** la bague interne (32) a une épaisseur E2 supérieure à 0,5mm, de préférence supérieure à 1mm.

## Patentansprüche

1. Drehende Rührvorrichtung (6) einer Getränkezubereitungsmaschine (1), wobei die Vorrichtung ein drehendes Werkzeug (7) umfasst, das um eine Achse A dreht und dazu bestimmt ist, eine Zubereitung, die in einem Behälter (4) enthalten ist, zu rühren, und eine Leitung (24) zum Fördern von Warmwasser und/oder Dampf zu dem drehenden Werkzeug, wobei die Förderleitung einen hohlen Teil (18) einer Antriebswelle (12) umfasst, die mit einem röhrenförmigen Teil (20) in Kommunikation steht, der sich entlang der Achse A zwischen einem ersten Ende (22), das mit dem drehenden Werkzeug mittels einer ersten Kopplungsvorrichtung gekoppelt ist, und einem zweiten Ende (23), das mit dem hohlen Teil mittels einer zweiten Kopplungsvorrichtung gekoppelt ist, erstreckt, **dadurch gekennzeichnet, dass** die zweite Kopplungsvorrichtung eine magnetische Kopplungsvorrichtung (25) ist, die dazu konfiguriert ist, eine magnetische Anziehungskraft entlang der Achse A zwischen der Antriebswelle (12) und dem zweiten Ende (23) des röhrenförmigen Teils (20) zu erzeugen, wobei die magnetische Kopplungsvorrichtung ein metallisches Organ (30) umfasst, das auf dem zweiten Ende (23) eingerichtet und aus einem Innenring (32) gebildet ist, der aus rostfreiem Stahl, der der Korrosion in Dampfumgebung standhält, hergestellt ist, und aus einem Außenring (31), der aus einem ferromagnetischen Material hergestellt ist, wobei der Innenring (32) dazu bestimmt ist, auf dem hohlen Teil (18), der aus rostfreiem Stahl hergestellt ist, der der Korrosion in Dampfumgebung standhält, bei der Herstellung der Kopplung zu gleiten.

2. Drehende Rührvorrichtung (6) nach Anspruch 1, **dadurch gekennzeichnet, dass** der Innenring (32) eng in den Außenring (31) montiert ist.

3. Drehende Rührvorrichtung (6) nach einem der Ansprüche 1 bis 2, **dadurch gekennzeichnet, dass** das zweite Ende (23) des röhrenförmigen Teils (20) aus einem Kunststoff hergestellt ist, der eine Außenfläche des Außenrings (31) umgibt.

4. Rührvorrichtung (6) nach einem der Ansprüche 1 bis 3, **dadurch gekennzeichnet, dass** der hohle Teil (18) der Antriebswelle (12) einen Außendurchmesser D aufweist, und dass der Innenring (32) eine Höhe H aufweist, wobei die Höhe H größer ist als der Durchmesser D.

5. Drehende Rührvorrichtung (6) nach einem der Ansprüche 1 bis 4, **dadurch gekennzeichnet, dass** der hohle Teil (18) der Antriebswelle (12) eine Nut (53) umfasst, die mit einer Dichtung (33) versehen ist, die dem Innenring (32) gegenüberliegend eingerichtet ist, wenn der röhrenförmige Teil (20) an der Antriebswelle (12) gekoppelt ist.

6. Drehende Rührvorrichtung (6) nach einem der Ansprüche 1 bis 5, **dadurch gekennzeichnet, dass** die Antriebswelle (12) ein magnetisches Element umfasst, das aus einem Dauermagnet (29) gebildet ist, der auf dem metallischen Organ (30) eine magnetische Anziehungskraft erzeugt, und der zum Andrücken einer Antriebswand (26) der Antriebswelle gegen eine Empfangswand (27) des zweiten Endes (23) des röhrenförmigen Teils (20) tendiert, um die Drehbewegung der Antriebswelle (12) an den röhrenförmigen Teil (20) zu übertragen.

7. Drehende Rührvorrichtung (6) nach Anspruch 6, **dadurch gekennzeichnet, dass** sich die Antriebswand (26) der Antriebswelle (12) und die Empfangswand (27), die auf dem zweiten Ende (23) des röhrenförmigen Teils (20) eingerichtet sind, in einer Ebene senkrecht zu der Achse A erstrecken.

8. Drehende Rührvorrichtung (6) nach einem der Ansprüche 1 bis 7, **dadurch gekennzeichnet, dass** sie eine optische Vorrichtung (38) zum Erfassen der Anwesenheit des röhrenförmigen Teils (20) auf der Antriebswelle (12) umfasst, die eine Zelle (39) zum Senden eines Lichtstrahls und eine Zelle (40) zum Empfangen des Strahls umfasst, wobei der röhrenförmige Teil eine Ausstülpung am Durchmesser im Bereich des metallischen Organs (30), die den Strahl schneidet, wenn der röhrenförmige Teil auf der Antriebswelle angefügt wird, umfasst.

9. Drehende Rührvorrichtung (6) nach Anspruch 8, **dadurch gekennzeichnet, dass** die optische Erfassungsvorrichtung (38) mindestens einen Lichtwellenleiter (41, 42) zum Umlenken um 90° des Lichtstrahls umfasst.

10. Drehende Rührvorrichtung (6) nach einem der Ansprüche 1 bis 9, **dadurch gekennzeichnet, dass** die zweite Kopplungsvorrichtung ein System aus rutschsicheren mechanischen Anschlägen umfasst, die sich bei dem Koppeln unter der Einwirkung der magnetischen Anziehungskraft automatisch ausrichten.

11. Drehende Rührvorrichtung (6) nach einem der Ansprüche 1 bis 10, **dadurch gekennzeichnet, dass** sie einen Elektromotor (10) umfasst, der dazu bestimmt ist, die Antriebswelle (12) anzutreiben.

12. Drehende Rührvorrichtung (6) nach einem der Ansprüche 1 bis 11, **dadurch gekennzeichnet, dass** die Rührvorrichtung einen Dampfkasten (11) umfasst, der eine Kammer (15), einen radialen Dampfeingangskanal, zwei dichte Lager (13, 14) zum Führen der Antriebswelle (12) umfasst, wobei der hohle Teil (18) der Antriebswelle (12) die Kammer (15) mit dem röhrenförmigen Teil (20) derart verbindet, dass das Warmwasser und/oder der Dampf gefördert wird.

13. Drehende Rührvorrichtung (6) nach einem der Ansprüche 1 bis 12, **dadurch gekennzeichnet, dass** der Außenring (31) eine Dicke E1 größer als 0,5 mm, vorzugsweise größer als 1 mm besitzt.

14. Drehende Rührvorrichtung (6) nach einem der Ansprüche 1 bis 13, **dadurch gekennzeichnet, dass** der Innenring (32) eine Dicke E2 größer als 0,5 mm, vorzugsweise größer als 1 mm besitzt.

## Claims

1. Rotary stirring device (6) for a beverage preparation machine (1), said device comprising a rotary tool (7) about an axis A and intended to stir a preparation contained in a container (4) and a pipe (24) for delivering hot water and/or steam to the rotary tool, said delivery pipe comprising a hollow portion (18) of a drive shaft (12) which communicates with a tubular portion (20) which extends along the axis A between a first end (22) which is coupled to the rotary tool by means of a first coupling device and a second end (23) which is coupled to said hollow portion by means of a second coupling device, **characterised in that** the second coupling device is a magnetic coupling device (25) configured to generate a magnetic attraction force along the axis A between the drive shaft (12) and the second end (23) of the tubular portion (20), the magnetic coupling device comprising a metal member (30) arranged on said second end (23) and formed by an inner ring (32) made of stainless steel resistant to corrosion in steam ambience and an outer ring (31) made of a ferromagnetic material, the inner ring (32) being intended to slide over the hollow portion (18) which is made of stainless steel resistant to corrosion in a steam ambience, during the achievement of the coupling.

2. Rotary stirring device (6) according to claim 1, **characterised in that** the inner ring (32) is mounted clamped in the outer ring (31).

3. Rotary stirring device (6) according to any one of claims 1 to 2, **characterised in that** the second end (23) of the tubular portion (20) is made of a plastic material which surrounds an outer face of the outer ring (31).

4. Rotary stirring device (6) according to any one of claims 1 to 3, **characterised in that** the hollow portion (18) of the drive shaft (12) has an outer diameter D and **in that** the inner ring (32) has a height H, the height H being greater than the diameter D.

5. Rotary stirring device (6) according to any one of claims 1 to 4, **characterised in that** the hollow portion (18) of the drive shaft (12) comprises a recess (53) provided with a seal (33) which is arranged opposite the inner ring (32) when the tubular portion (20) is coupled to the drive shaft (12).

6. Rotary stirring device (6) according to any one of claims 1 to 5, **characterised in that** the drive shaft (12) comprises a magnetic element formed by a permanent magnet (29) which generates on the metal member (30), a magnetic attraction force and which tends to flatten a motor wall (26) of the drive shaft against a receiving wall (27) of the second end (23) of the tubular portion (20) to transmit the rotation movement of the drive shaft (12) to the tubular portion (20).

7. Rotary stirring device (6) according to claim 6, **characterised in that** the motor wall (26) of the drive shaft (12) and the receiving wall (27) arranged on the second end (23) of the tubular portion (20) extend in a plane perpendicular to the axis A.

8. Rotary stirring device (6) according to any one of claims 1 to 7, **characterised in that** it comprises a device for optically detecting (38) the presence of the tubular portion (20) on the drive shaft (12) comprising an emitter cell (39) of a light beam and a receiver cell (40) of said beam, the tubular portion comprising an excrescence in diameter at the level of the metal member (30) which cuts the beam when said tubular portion is assembled on the drive shaft.

9. Rotary stirring device (6) according to claim 8, **characterised in that** the optical detection device (38) comprises at least one optical guide (41, 42) for returning the light beam at 90°.

10. Rotary stirring device (6) according to any one of claims 1 to 9, **characterised in that** the second coupling device comprises a system of non-slide mechanical abutments which are aligned automatically during the coupling under the effect of the magnetic attraction force.

11. Rotary stirring device (6) according to any one of claims 1 to 10, **characterised in that** it comprises an electric motor (10) intended to drive the drive shaft (12).

12. Rotary stirring device (6) according to any one of claims 1 to 11, **characterised in that** said stirring device comprises a steam box (11) comprising a chamber (15), a radial steam inlet channel, two sealed bearings (13,14) forguiding the drive shaft (12), the hollow portion (18) of the drive shaft (12) connecting the chamber (15) to the tubular portion (20) so as to deliver hot water and/or steam.

13. Rotary stirring device (6) according to any one of claims 1 to 12, **characterised in that** the outer ring (31) has a thickness E1 greater than 0.5 mm, preferably greater than 1 mm.

14. Rotary stirring device (6) according to any one of claims 1 to 13, **characterised in that** the inner ring (32) has a thickness E2 greater than 0.5 mm, preferably greater than 1 mm.
